Europäisches Patentamt

European Patent Office

Office européen des brevets

(19)

(11) Veröffentlichungsnummer: **0 240 670**
A2

(12) ## EUROPÄISCHE PATENTANMELDUNG

(21) Anmeldenummer: **87101913.9**

(22) Anmeldetag: **11.02.87**

(51) Int. Cl.³: **H 02 K 7/102**
**H 02 K 3/32**

(30) Priorität: **07.04.86 DE 3611609**

(43) Veröffentlichungstag der Anmeldung:
**14.10.87 Patentblatt 87/42**

(84) Benannte Vertragsstaaten:
**AT BE CH ES FR GB IT LI NL SE**

(71) Anmelder: **GEDA-Dechentreiter Maschinenbau GmbH**
**Mertinger Strasse 60**
**D-8854 Asbach-Bäumenheim(DE)**

(72) Erfinder: **Dechentreiter, Georg**
**Mertinger Strasse 60**
**D-8854 Asbach-Bäumenheim(DE)**

(74) Vertreter: **Liebau, Gerhard, Dipl.-Ing.**
**Birkenstrasse 39**
**D-8900 Augsburg 22(DE)**

(54) **Bremsmotor.**

(57) Bei einem Bremsmotor mit einer Läuferwelle (2), deren eines Ende mit einer elektrisch betätigbaren Bremse (7) verbunden ist, besteht die Läuferwelle (2) aus zwei koaxialen Wellenteilen (2a, 2b), zwischen deren einander zugekehrten inneren Enden (2') eine Isolierschicht (3) vorgesehen ist. Die inneren Enden (2') der Wellenteile (2a, 2b) und die Isolierschicht (3) sind innerhalb einer Bohrung (4) des Läuferpaketes (5) angeordnet. Zwischen dieser Bohrung (4) und den Wellenteilen (2a, 2b) ist eine Isolierhülse (6) vorgesehen.

EP 0 240 670 A2

Croydon Printing Company Ltd.

## Bremsmotor.

Die Erfindung betrifft einen Bremsmotor, mit einer ein Läuferpaket tragenden Läuferwelle, deren eines Ende mit einer elektrisch betätigbaren Bremse verbunden ist (DE-OS 22 57 290). Motoren, wie sie insbesondere zum Antrieb von Seilwinden bei Bauaufzügen verwendet werden, sollen schutzisoliert sein. Es gibt jedoch derzeit keine schutzisolierten Bremsmotoren mit elektrisch betätigbarer Bremse. Bei derartigen Bremsmotoren besteht die Gefahr, daß es bei einem Defekt an der Isolierung der elektrisch betätigten Bremse über die Läuferwelle und einem auf der Läuferwelle angeordneten Zahnrad zu einem Körperschluß kommt und ein nicht zum Betriebsstromkreis gehörendes, berührbares Teil der Winde oder eines sonstigen Gerätes unter Spannung steht.

Es gibt zwar schutzisolierte Elektromotoren (DE-OS 21 24 229), bei denen als zusätzliche Isolierung der nicht zum Betriebsstromkreis gehörenden Läuferwelle zwischen dieser und dem Läuferpaket ein Isolierrohr angeordnet ist. Hiermit wird zwar die Läuferwelle von dem Betriebsstromkreis des Elektromotors getrennt, eine mögliche elektrische Verbindung zwischen der am einen Ende der Läuferwelle vorgesehenen Bremse und dem Abtriebsende der Läuferwelle jedoch nicht unterbrochen.

Der Erfindung liegt deshalb die Aufgabe zugrunde, einen Bremsmotor der eingangs erwähnten Art zu schaffen, dessen herausragendes Ende der Läuferwelle sowohl gegenüber dem Betriebsstromkreis der Bremse als auch gegenüber dem Betriebsstromkreis des Motors schutzisoliert ist.

Dies wird nach der Erfindung dadurch erreicht, daß die Läuferwelle aus zwei koaxialen Wellenteilen besteht, zwischen deren einander zugekehrten inneren Enden eine Isolierschicht vorgesehen ist, daß die inneren Enden der Wellenteile und die Isolierschicht innerhalb einer Bohrung des Läuferpaketes angeordnet sind und daß zwischen dieser Bohrung und den Wellenteilen eine Isolierhülse vorgesehen ist.

Hiervon abweichende Lösungen der anmeldungsgemäßen Aufgabe zeigen die DD-PS 128 644 und die DD-PS 100 120.

Durch die erfindungsgemäße Anordnung wird eine perfekte Schutzisolierung der Läuferwelle gegenüber spannungsführenden Teilen des Motors und der Bremse geschaffen. Da die Schutzisolierung innerhalb des Läuferpaketes angeordnet ist, erforderte sie praktisch keinen zusätzlichen Platz und sie ist außerdem gegen mechanische Beschädigung geschützt. Obwohl die Läuferwelle geteilt ist, wird ihre Biegesteifigkeit nicht beeinträchtigt, denn die Isolierhülse und das Läuferpaket, welche die Wellenteile eng umschließen, bilden eine, die Verbindungsstelle versteifende Muffe. Außerdem braucht das Getriebegehäuse bzw. das getriebeseitige Lagerschild des Motors nicht schutzisoliert zu sein.

Vorteilhafte Ausgestaltungen der Erfindung sind in den Unteransprüchen gekennzeichnet.

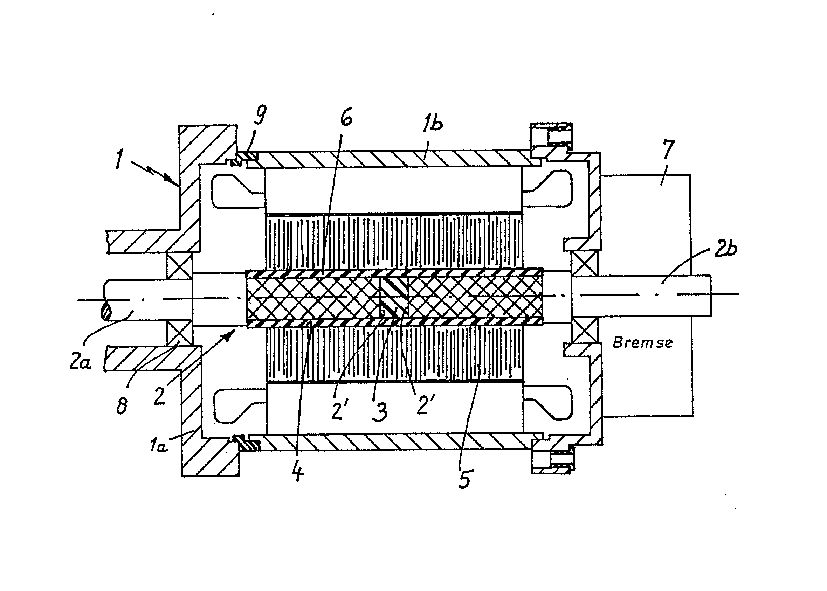

Die Erfindung wird in folgendem, anhand eines in der Zeichnung dargestellten Ausführungsbeispieles näher erläutert.

Die Zeichnung zeigt einen schematischen Axialschnitt des schutzisolierten Bremsmotors.

An das Motorgehäuse 1 ist die Bremse 7 angeflanscht. Diese ist elektrisch betätigbar, beispielsweise wird sie magnetisch durch einen eingebauten Wechselstrommagneten gelüftet, dessen Wicklung parallel zur Motorwicklung liegt. In dem Gehäuse 1 ist ferner die Läuferwelle 2 drehbar gelagert. Diese besteht aus zwei koaxialen Wellenteilen 2a und 2b. Zwischen den einander zugekehrten inneren Enden 2' der beiden Wellenteile 2a und 2b ist eine Isolierschicht 3 in Form einer Isolierscheibe vorgesehen. Die inneren Enden 2' der Wellenteile 2a, 2b und die Isolierschicht 3 sind innerhalb einer Bohrung 4 eines Läuferpaketes 5 angeordnet. Das Läuferpaket 5 ist als Kurzschluß- oder Käfigläufer ausgebildet. Zwischen der Bohrung 4 und den Wellenteilen 2a, 2b ist eine Isolierhülle 6 vorgesehen. Auf diese Weise ist das Wellenteil 2a, welches die Abtriebsseite der Läuferwelle 2 bildet, elektrisch von dem mit der Bremse 7 verbundenen Wellenteil 2b und auch vom Läuferpaket 5 zusätzlich schutzisoliert. Außerdem bildet die Isolierhülse 6, welche die Wellenteile 2a und 2b eng umschließt und das Läuferpaket 5, welches mit seiner Bohrung 4 die Isolierhülse 6 eng umschließt, eine Art Muffe, welche die beiden Wellenteile 2a und 2b drehfest und biegesteif miteinander verbindet.

Zweckmäßig sind die inneren Enden 2' der Wellenteile 2a, 2b etwa in der axialen Mitte der Läuferbohrung 4 angeordnet, da hierdurch die beste Biegesteifigkeit erreicht wird.

Um der geteilten Läuferwelle 2 eine gute Biegesteifigkeit zu verleihen und außerdem eine drehfeste Verbindung zwischen beiden Wellenteilen 2a, 2b zu schaffen, besteht die Isolierhülse 6 vorteilhaft aus glasfaserverstärktem Kunststoff, insbesondere Epoxydharz. Die Herstellung erfolgt zweckmäßig so, daß zwischen die einander zugekehrten Enden 2' der beiden Wellenteile 2a, 2b zuerst die Isolierscheibe 3 eingesetzt und anschließend die Wellenteile 2a, 2b mit Epoxydharz getränktem Glasfasergewebe umwickelt werden. Die umwickelten Wellenteile werden dann in eine Form gebracht und das Epoxydharz unter Anwendung von Wärme und Druck ausgehärtet. Hierbei ist es wesentlich, daß die Form Lagerschalen für die aus der Isolierhülse 6 herausragenden Teile der Wellenteile aufweist, da durch diese Lagerschalen die Wellenteile 2a, 2b während des Aushärtens genau koaxial zueinander ausgerichtet werden.

Um das Haftvermögen der Isolierhülse 6 auf den Wellenteilen 2a, 2b zu verbessern, sind die Mantelflächen der Wellenteile an ihren von der Isolierhülse 6 umschlossenen Bereichen aufgerauht, sie sind zweckmäßig gerändelt, was durch die Kreuzschraffur in der Zeichnung angedeutet werden soll.

Zur Herstellung einer festen Verbindung zwischen der Bohrung 4 des Läuferpaketes 5 und der Isolierhülse 6 ist das Läuferpaket mit seiner Bohrung 4 zweckmäßig auf die Isolierhülse 6 aufgeschrumpft. Zu diesem Zweck wird die Isolierhülse 6 nach dem Aushärten des Epoxydharzes an ihrem Außenumfang durch Drehen genau bearbeitet. Durch Tiefkühlen der Läuferwelle 2 mit der Isolierhülse 6 wird deren Durchmesser verkleinert und durch Erwärmen des Läuferpaketes 5 dessen Bohrung 4 im Durchmesser erweitert. Die Läuferwelle 2 kann dann mit ihrer Isolierhülse 6 in die Bohrung 4 des Läuferpaketes 5 gesteckt werden. Nachdem beide Teile wieder die Raumtemperatur erreicht haben, ist das Läuferpaket 5 fest auf die Isolierhülse 6 aufgeschrumpft.

Wie man aus der Zeichnung ferner entnehmen kann, braucht zwischen dem Lager 8 des abtriebsseitigen Wellenteils 2a und dem getriebeseitigen Lagerschild 1a des Motorgehäuses keine Isolierung vorgesehen zu sein und auch das Lagerschild 1a selbst muß nicht schutzisoliert werden, sofern zwischen dem Statorgehäuseteil 1b und dem Lagerschild 1a ein Isolierring 9 angeordnet ist.

Ansprüche

1. Bremsmotor, mit einer ein Läuferpaket tragenden Läuferwelle, deren eines Ende mit einer elektrisch betätigbaren Bremse verbunden ist, dadurch gekennzeichnet,
   daß zur Bildung einer Schutzisolierung die Läuferwelle
   (2) aus zwei koaxialen Wellenteilen (2a, 2b) besteht,
   zwischen deren einander zugekehrten inneren Enden (2')
   eine Isolierschicht (3) vorgesehen ist, daß die inneren
   Enden (2') der Wellenteile (2a, 2b) und die Isolierschicht (3) innerhalb einer Bohrung (4) des Läuferpaketes (5) angeordnet sind und daß zwischen dieser
   Bohrung (4) und den Wellenteilen (2a, 2b) eine Isolierhülse (6) vorgesehen ist.

2. Bremsmotor nach Anspruch 1, dadurch gekennzeichnet,
   daß die inneren Enden (2') der Wellenteile (2a, 2b)
   etwa in der axialen Mitte der Läuferbohrung (4) angeordnet sind.

3. Bremsmotor nach Anspruch 1, dadurch gekennzeichnet,
   daß die Isolierhülse (6) aus glasfaserverstärktem
   Kunststoff, insbesondere Epoxydharz besteht.

4. Bremsmotor nach Anspruch 1 oder 3, dadurch gekennzeichnet, daß die Mantelflächen der Wellenteile (2a, 2b)
   an ihren von der Isolierhülse (6) umschlossenen Bereichen aufgerauht sind.

5. Bremsmotor nach Anspruch 4, dadurch gekennzeichnet,
   daß die Mantelflächen der Wellenteile (2a, 2b) an
   ihren von der Isolierhülse umschlossenen Bereichen
   gerändelt sind.

**0240670**

6. Bremsmotor nach Anspruch 1, dadurch gekennzeichnet,
   daß das Läuferpaket (5) mit seiner Bohrung (4) auf
   die die Wellenteile (2a, 2b) umschließende Isolierhülse (6) aufgeschrumpft ist.